(19) Europäisches Patentamt
European Patent Office
Office européen des brevets

(11) **EP 4 207 417 A1**

(12) **EUROPEAN PATENT APPLICATION**

(43) Date of publication:
**05.07.2023 Bulletin 2023/27**

(21) Application number: **22214241.6**

(22) Date of filing: **16.12.2022**

(51) International Patent Classification (IPC):
**H01M 10/0525** (2010.01) **H01M 50/403** (2021.01)
**H01M 50/426** (2021.01) **H01M 50/431** (2021.01)
**H01M 50/449** (2021.01)

(52) Cooperative Patent Classification (CPC):
**H01M 50/403; H01M 10/0525; H01M 50/426;
H01M 50/431; H01M 50/449**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021 JP 2021208540**

(71) Applicant: **Prime Planet Energy & Solutions, Inc.
Chuo-ku
Tokyo
103-0022 (JP)**

(72) Inventors:
• **KUSADA, Hideo**
**Tokyo, 103-0022 (JP)**
• **OBAYASHI, Atsushi**
**Tokyo, 103-0022 (JP)**
• **NOWATARI, Yuko**
**Tokyo, 103-0022 (JP)**
• **MIYAZAKI, Shinya**
**Tokyo, 103-0022 (JP)**

(74) Representative: **Kuhnen & Wacker
Patent- und Rechtsanwaltsbüro PartG mbB
Prinz-Ludwig-Straße 40A
85354 Freising (DE)**

(54) **SEPARATOR, NON-AQUEOUS ELECTROLYTE SECONDARY CELL INCLUDING THE SAME, AND ASSEMBLED BATTERY**

(57) The separator disclosed herein includes a substrate and an adhesive layer. The adhesive layer is partially provided on one side of, or both of two sides of, the substrate. Where an initial thickness of the separator is T0, a thickness of the separator when the separator is impregnated with an electrolyte solution and supplied with a pressure of 1 MPa is T1, a thickness of the separator when, after this, the separator is supplied with a pressure of 2 MPa for 1 hour, and the pressure is decreased to 0.5 MPa, is T2, and a thickness of the separator when, after this, the separator is supplied with a pressure of 4 MPa for 48 hours, is T4, the separator satisfies inequalities (1) through (3): (1) $1 \le T1/T0 \le 1.1$; (2) $0.92 \le T2/T1 \le 1$; and (3) $0.6 \le T4/T1 \le 0.8$.

FIG.5

EP 4 207 417 A1

**Description**

BACKGROUND

The present disclosure relates to a separator, and also refers to a non-aqueous electrolyte secondary cell including the separator, and an assembled battery.

Non-aqueous electrolyte secondary cells such as lithium ion secondary cells and the like are preferably used as portable power sources of personal computers, mobile terminals and the like, and driving power sources for vehicles such as battery electric vehicles (BEVs), hybrid electric vehicles (HEVs), plug-in hybrid electric vehicles (PHEVs), and the like.

An example of such non-aqueous electrolyte secondary cells includes an electrode assembly, a non-aqueous electrolyte solution, and a cell case accommodating the electrode assembly and the non-aqueous electrolyte solution. The non-aqueous electrolyte secondary cell is used, for example, in the form of an assembled battery in which plural cells are aligned in a stacked state and assembled by a predetermined pressure provided by a restraining member (hereinafter, such a predetermined pressure will be referred to also as an "assembling pressure"). Typically, the assembled battery is subjected to initial charge and discharge in a state of being supplied with an assembling pressure as a load. At this point, the electrode assembly included in the non-aqueous electrolyte secondary cell is expanded and contracted along with the charge and discharge. The initial charge and discharge cause various reactions such as expansion of an active material, formation of a cover film on a surface of the active material, and the like. Therefore, an inner pressure of the electrode assembly is higher after the initial charge and discharge than before the initial charge and discharge. Namely, after the initial charge and discharge, a pressure by which the electrode assembly presses the cell case from the inside to the outside is generated, and a counterforce against this pressure (hereinafter, the counterforce will be referred to also as a "BOL counterforce (Beginning-of-Life counterforce)") is generated.

As a result of repeated charge and discharge of the non-aqueous electrolyte secondary cell, a negative electrode thereof has a thickness thereof increased. Therefore, the electrode assembly has an expansion pressure thereof increased along with the repetition of the charge and discharge. Such increase in the expansion pressure of the electrode assembly also increases the counterforce against the expansion pressure. This increases the pressure caused to the electrode assembly, which, for example, easily causes the cell to have deteriorated performance and a shorter life. One conceivable method to decrease the counterforce against the expansion pressure of the electrode assembly is to decrease the assembling pressure of the assembled battery. However, there is a trade-off relationship that such decrease in the assembling pressure decreases the BOL counterforce and as a result, the assembled battery has an assembling stability thereof deteriorated. Therefore, a technology that appropriately controls the counterforce against the expansion pressure of the electrode assembly is demanded. As such a technology, Japanese Patent No. 6865379 discloses locating a non-foaming elastic sheet between the electrode assembly and the cell case. Japanese Laid-Open Patent Publication No. 2013-222510, Japanese Patent No. 5799499, and Japanese Patent No. 5328034 each disclose a structure of a separator that is capable of controlling the pressure of the electrode assembly.

SUMMARY

Studies made by the present inventor have found out that the technology that suppresses the increase in the counterforce against the expansion pressure of the electrode assembly caused by the repeated charge and discharge still has room for improvement. Suppression on the increase in the counterforce against the expansion pressure of the electrode assembly caused by the repeated charge and discharge allows the assembling pressure of the assembled battery to be adjusted easily and improves the productivity.

The present disclosure, made in light of such a situation, has a main object of providing a separator suppressing increase in a counterforce against an expansion pressure of an electrode assembly caused by repeated charge and discharge of a non-aqueous electrolyte secondary cell. Another object of the present disclosure is to provide a non-aqueous electrolyte secondary cell including the separator, and an assembled battery.

A separator disclosed herein includes a sheet-like substrate made of a porous resin, and an adhesive layer containing an adhesive resin. The adhesive layer is partially disposed on one side of, or both of two sides of, the substrate in a thickness direction thereof. Where an initial thickness of the separator is T0, a thickness of the separator in a state where the separator is impregnated with an electrolyte solution and supplied with a pressure of 1 MPa in a thickness direction thereof is T1, a thickness of the separator in a state where, after obtaining the thickness T1, the separator is supplied with a pressure of 2 MPa in the thickness direction thereof for 1 hour, and the pressure is decreased to 0.5 MPa, is T2, and a thickness of the separator in a state where, after obtaining the thickness T2, the separator is supplied with a pressure of 4 MPa in the thickness direction thereof, and the pressure is kept for 48 hours, is T4, the separator satisfies inequalities (1) through (3):

$$(1) \quad 1 \leq T1/T0 \leq 1.1$$

$$(2) \quad 0.92 \leq T2/T1 \leq 1$$

$$(3) \quad 0.6 \leq T4/T1 \leq 0.8$$

The separator satisfying inequalities (1) through (3) has a thickness thereof decreased to an appropriate range. This alleviates the applied pressure when being supplied, in the thickness direction thereof, with a pressure of 4 MPa, which corresponds to an expansion pressure of a negative electrode caused by repeated charge and discharge. Therefore, the separator realizes a non-aqueous electrolyte secondary cell that suppresses increase in a counterforce against the expansion pressure of an electrode assembly caused by the repeated charge and discharge. The separator having the above-described structure suppresses a change in the thickness thereof while the non-aqueous electrolyte secondary cell is assembled with other cells to form an assembled battery, and thus the assembled battery has an assembling stability thereof improved.

In an embodiment of the separator disclosed herein, on the side of the substrate where the adhesive layer is disposed, the adhesive layer occupies a surface area at a ratio of 40% or higher and 60% or lower with respect to a surface of the substrate. With such a structure, when a pressure is applied in the thickness direction of the separator, the adhesive layer is easily spread into a region where the adhesive layer is not formed (adhesive layer non-formation region). This allows the pressure to be easily dispersed in a direction different from the thickness direction. Therefore, the pressure is preferably alleviated.

In an embodiment of the separator disclosed herein, on the side of the substrate where the adhesive layer is disposed, the adhesive layer has an average thickness of 2 μm or greater and 3 μm or less. With such a structure, the adhesive layer spread by the pressure applied in the thickness direction is guaranteed to have a certain thickness. Therefore, the pressure is preferably alleviated.

In an embodiment of the separator disclosed herein, the adhesive layer may be provided at a predetermined pitch so as to form a striped pattern. According to such a structure, portions of the adhesive layer and the adhesive layer non-formation regions are located alternately. Therefore, when a pressure is applied in the thickness direction of the separator, the adhesive layer is easily spread into the adhesive layer non-formation regions. Thus, the pressure is preferably alleviated.

The present disclosure provides a non-aqueous electrolyte secondary cell including an electrode assembly that includes a positive electrode, a negative electrode, and the separator disclosed herein; and a non-aqueous electrolyte solution. Such a non-aqueous electrolyte secondary cell suppresses increase in the counterforce against the expansion pressure of the electrode assembly caused by the repeated charge and discharge.

The present disclosure provides an assembled battery including plural cells aligned while being electrically connected to each other. At least one of the plural cells is the non-aqueous electrolyte secondary cell disclosed herein. Such a structure suppresses increase in the counterforce against the expansion pressure of the electrode assembly caused by the repeated charge and discharge. Therefore, the assembled battery has an improved assembling stability.

BRIEF DESCRIPTION OF THE DRAWINGS

FIG. 1 is a cross-sectional view schematically showing a structure of a non-aqueous electrolyte secondary cell according to an embodiment.
FIG. 2 is an exploded view schematically showing a structure of an electrode assembly of the non-aqueous electrolyte secondary cell according to an embodiment.
FIG. 3 is a perspective view schematically showing a structure of an assembled battery according to an embodiment.
FIG. 4 is a schematic view (top view) of a separator according to an embodiment as seen in a direction vertical to a surface thereof.
FIG. 5 is a partial cross-sectional view of the separator according to an embodiment.
FIG. 6 is a partially enlarged view of the separator, showing a longer side and the vicinity thereof in FIG. 4.
FIG. 7 is a schematic view of the separator according to an embodiment, in a state of being impregnated with an electrolyte solution and supplied with a pressure of 1 MPa in a thickness direction of the separator.
FIG. 8 is a schematic view of the separator according to an embodiment, in a state of being impregnated with the electrolyte solution and supplied with a pressure of 0.5 MPa in the thickness direction of the separator.

FIG. 9 is a schematic view of the separator according to an embodiment, in a state of being impregnated with the electrolyte solution and supplied with a pressure of 4 MPa in the thickness direction of the separator.

DETAILED DESCRIPTION

Hereinafter, a technology disclosed herein will be described in detail. A matter that is other than a matter specifically referred to in this specification but is necessary to carry out the technology disclosed herein may be understood as a matter of design for a person of ordinary skill in the art based on the conventional technology in the art. Contents of the technology disclosed herein may be carried out based on contents disclosed herein and the technological common knowledge in the art.

The drawings are drawn schematically, and the relationship between sizes (length, width, thickness, etc.) does not reflect the actual relationship between sizes. In the drawings referred to below, components or portions having the same functions will bear the same reference signs, and overlapping descriptions may be omitted or simplified.

In this specification, a numerical range described as "A to B (A and B are each a numerical value)" refers to "A or more and B or less", and encompasses "more than A and less than B", "more than A and B or less", and "A or more and less than B".

In this specification, the term "secondary cell" refers to an electric power storage device in general that is chargeable and dischargeable repeatedly, and refers to a concept encompassing a so-called storage cell (chemical cell) such as a lithium ion secondary cell, a nickel hydrogen secondary cell or the like, and a capacitor (physical cell) such as an electric double layer capacitor or the like. In this specification, the term "lithium ion secondary cell" refers to a secondary cell that uses lithium ions as a charge carrier and realizes charge and discharge by movement of charges, accompanying lithium ions, between a positive electrode and a negative electrode. Hereinafter, an embodiment of a non-aqueous electrolyte secondary cell 100, in which a separator disclosed herein is preferably usable, will be described.

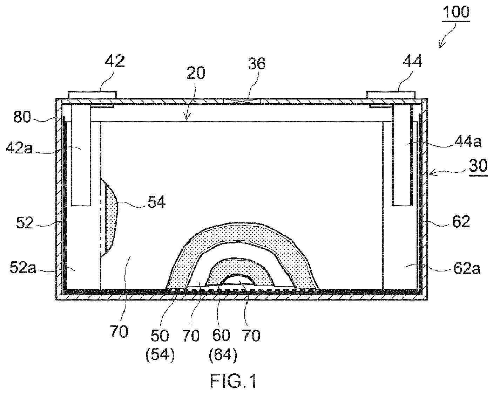

FIG. 1 is a cross-sectional view schematically showing a structure of the non-aqueous electrolyte secondary cell 100 according to an embodiment. The non-aqueous electrolyte secondary cell 100 is a quadrangular sealed cell including a flat electrode assembly (wound electrode assembly) 20 and a non-aqueous electrolyte solution (not shown) accommodated in a cell case 30. In this embodiment, the non-aqueous electrolyte secondary cell 100 is a lithium ion secondary cell. The electrode assembly 20 is accommodated in the cell case 30 in a state of being accommodated in an electrode assembly holder 80 preventing electrical connection between the electrode assembly 20 and the cell case 30. The cell case 30 is provided with a positive electrode terminal 42 and a negative electrode terminal 44 both for connection with an external device. The cell case 30 is also provided with a thin safety valve 36, which is set to release an inner pressure of the cell case 30 in the case where the inner pressure is raised to a predetermined level or higher. The cell case 30 also includes a liquid injection opening (not shown) through which the non-aqueous electrolyte solution is to be injected. The cell case 30 is preferably formed of a metal material that is highly strong and lightweight and has a high thermal conductivity. Examples of such a metal material include aluminum, steel and the like.

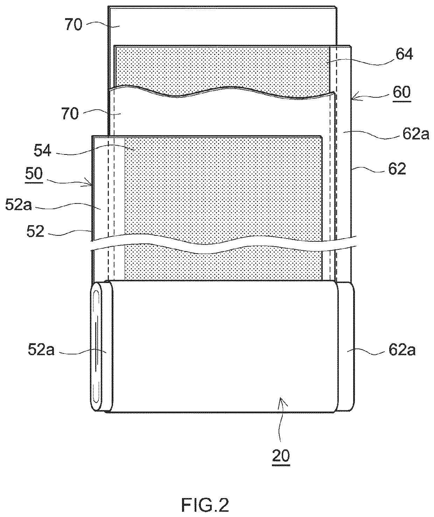

FIG. 2 is an exploded view schematically showing a structure of the electrode assembly 20 of the non-aqueous electrolyte secondary cell 100 according to an embodiment. As shown in FIG. 2, the electrode assembly 20 is a wound electrode assembly in which a lengthy positive electrode 50 and a lengthy negative electrode 60 are stacked on each other, with two lengthy separators 70 being sandwiched between the positive electrode 50 and the negative electrode 60, and are wound about a winding axis. The positive electrode 50 includes a positive electrode current collector 52 and a positive electrode mixture layer 54 formed on one surface of, or both of two surfaces of, the positive electrode current collector 52 (in this embodiment, formed on both of the two surfaces of the positive electrode current collector 52) in a longitudinal direction. The positive electrode current collector 52 includes a strip-like portion in which the positive electrode mixture layer 54 is not formed and the positive electrode current collector 52 is exposed (i.e., a positive electrode current collector exposed portion 52a), along an edge in a winding axis direction (i.e., a sheet width direction perpendicular to the longitudinal direction). The negative electrode 60 includes a negative electrode current collector 62 and a negative electrode mixture layer 64 formed on one surface of, or both of two surfaces of, the negative electrode current collector 62 (in this example, formed on both of the two surfaces of the negative electrode current collector 62) in the longitudinal direction. The negative electrode current collector 62 includes a strip-like portion in which the negative electrode mixture layer 64 is not formed and the negative electrode current collector 62 is exposed (i.e., a negative electrode current collector exposed portion 62a), along an edge opposite to the above-mentioned edge in the winding axis direction. The positive electrode current collector exposed portion 52a is joined with a positive electrode current collector 42a, and the negative electrode current collector exposed portion 62a is joined with a negative electrode current collector 44a (see FIG. 1). The positive electrode current collector 42a is electrically connected with the positive electrode terminal 42 for connection with an external device, and realizes electrical connection between the inside and the outside of the cell case 30. Similarly, the negative electrode current collector 44a is electrically connected with the negative electrode terminal 44 for connection with an external device, and realizes electrical connection between the inside and the outside of the cell case 30 (see FIG. 1). A current interrupt device (CID) may be provided between the positive electrode terminal 42 and the positive electrode current collector 42a, or between the negative electrode terminal 44 and the negative electrode current collector 44a.

The positive electrode current collector 52 included in the positive electrode 50 is formed of, for example, aluminum foil or the like. The positive electrode mixture layer 54 contains a positive electrode active material. The positive electrode active material may be any known positive electrode active material usable for a lithium ion secondary cell, and is, for example, a lithium composite metal oxide having a layer structure, a spinel structure, an olivine structure or the like (e.g., $LiNi_{1/3}Co_{1/3}Mn_{1/3}O_2$, $LiNiO_2$, $LiCoO_2$, $LiFeO_2$, $LiMn2O_4$, $LiNi_{0.5}Mn_{1.5}O_4$, $LiCrMnO_4$, $LiFePO_4$, or the like). The positive electrode mixture layer 54 may contain a conductive material, a binder or the like. As the conductive material, for example, carbon black such as acetylene black (AB) or the like, or another carbon material (graphite, or the like) is preferably usable. As the binder, for example, poly(vinylidene fluoride) (PVDF) or the like is usable.

The positive electrode mixture layer 54 may be formed as follows. The positive electrode active material and a material used as necessary (the conductive material, the binder or the like) are dispersed in an appropriate solvent (e.g., N-methyl-2-pyrrolidone (NMP)) to prepare a paste (or slurry) composition, and an appropriate amount of the composition is applied to the surface of the positive electrode current collector 52 and is dried.

The negative electrode current collector 62 included in the negative electrode 60 is formed of, for example, copper foil or the like. The negative electrode mixture layer 64 contains a negative electrode active material. The negative electrode active material may be, for example, a carbon material such as graphite, hard carbon, soft carbon or the like. The negative electrode mixture layer 64 may further contain a binder, a thickener or the like. As the binder, for example, styrene butadiene rubber (SBR) or the like is usable. As the thickener, for example, carboxymethylcellulose (CMC) or the like is usable.

The negative electrode mixture layer 64 may be formed as follows, for example. The negative electrode active material and a material used as necessary (the binder or the like) are dispersed in an appropriate solvent (e.g., ion exchange water) to prepare a paste (or slurry) composition, and an appropriate amount of the composition is applied to the surface of the negative electrode current collector 62 and is dried.

As the separator 70, a separator disclosed herein is used. The separator will be described below in detail.

As the non-aqueous electrolyte solution, any of materials substantially the same as those conventionally used for a lithium ion secondary cell is usable. For example, a non-aqueous electrolyte solution containing a support salt in an organic solvent (non-aqueous solvent) is usable. As the non-aqueous solvent, any of non-protic solvents such as carbonates, esters, ethers and the like is usable. Among these, a carbonate, for example, ethylenecarbonate (EC), diethylcarbonate (DEC), dimethylcarbonate (DMC), ethylmethylcarbonate (EMC) or the like is preferably usable. Alternatively, a fluorine-based solvent such as a fluorinated carbonate or the like, for example, monofluoroethylenecarbonate (MFEC), difluoroethylenecarbonate (DFEC), monofluoromethyldifluoromethylcarbonate (F-DMC), trifluorodimethylcarobnate (TFDMC) or the like is preferably usable. One of such non-aqueous solvents may be used independently, or two or more thereof may be used in combination appropriately. As the support salt, for example, a lithium salt such as $LiPF_6$, $LiBF_4$, $LiClO_4$ or the like is preferably usable. The support salt has a concentration that is preferably 0.7 mol/L or higher and 1.3 mol/L or lower, although there is no specific limitation on the concentration of the support salt.

The non-aqueous electrolyte solution may contain a component other than the non-aqueous solvent and the support salt as long as effects of the technology disclosed herein are not significantly inhibited. For example, the non-aqueous electrolyte solution may contain any of various additives such as a gas generating agent, a coating forming agent, a dispersant, a thickener and the like.

The electrode assembly holder 80 is formed of a material that may act as an insulating material. Examples of such a material include various thermoplastic materials, typically, polyolefin resin materials such as polypropylene (PP), polyethylene (PE) and the like. The electrode assembly holder 80 may have, for example, a bag-like shape having a top opening and a bottom, although there is no specific limitation on the shape of the electrode assembly holder 80.

The non-aqueous electrolyte secondary cell 100 may further include an elastic member in order to alleviate a pressure caused to the electrode assembly 20 by the charge. The elastic member is typically formed of an elastically deformable resin material that is proof against the non-aqueous electrolyte solution. As such a resin material, for example, chloroprene rubber, silicone rubber or the like is preferably usable. The elastic member may be typically sheet-like, although there is no specific limitation on the shape of the elastic member. The elastic member may have an elastic modulus of, for example, 0.5 MPa to 2 MPa. The elastic modulus of the elastic member is measured by a method in compliance with JIS K6272.

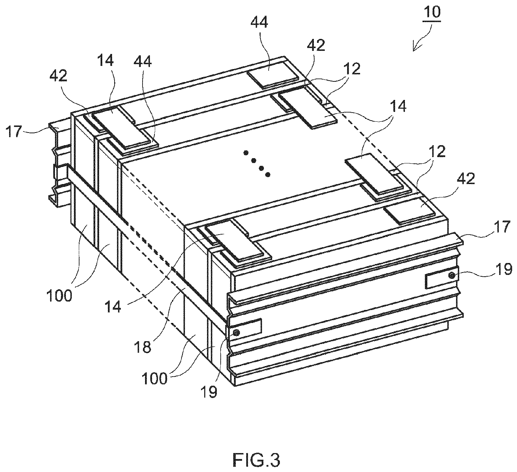

FIG. 3 is a perspective view schematically showing an assembled battery 10 according to an embodiment. As shown in FIG. 3, the non-aqueous electrolyte secondary cell 100 is used as each of plural cells included in the assembled battery 10 in this embodiment. The plural non-aqueous electrolyte secondary cells 100 are aligned while being electrically connected to each other. The non-aqueous electrolyte secondary cells 100 are aligned while being inverted alternately, so that the positive electrode terminals 42 and the negative electrode terminals 44 are located alternately in an alignment direction. Spacers 12 are held between the cells 100 aligned in this manner. The spacers 12 may act to dissipate heat efficiently or to adjust the length of the assembled battery 10. At both of two ends of the assembly of the aligned cells 100, a pair of end plates (restraining plates) 17 are provided. Beam members 18 for tightening are attached so as to connect the end plates 17 to each other like a bridge. Ends of each of the beam members 18 are tightened and secured to the end plates 17 by screws 19. In this manner, the plural non-aqueous electrolyte secondary cells 100 are restrained such that a predetermined restraining load (assembling pressure) is applied thereto in the alignment direction of the non-aqueous electrolyte secondary cells 100 (in a thickness direction of the electrode assemblies 20).

The assembled battery 10 includes busbars 14 each connecting two non-aqueous electrolyte secondary cells 100 adjacent to each other, more specifically, each connecting the positive electrode terminal 42 of one the cells (non-aqueous electrolyte secondary cells 100) and the negative electrode terminal 44 of the other cell (non-aqueous electrolyte secondary cell 100). With such a structure, the plural non-aqueous electrolyte secondary cells 100 are electrically connected to each other. In this embodiment, the plural non-aqueous electrolyte secondary cells 100 are connected in series. Alternatively, the plural non-aqueous electrolyte secondary cells 100 may be connected in parallel. The cells included in the assembled battery 10 merely need to include at least one non-aqueous electrolyte secondary cell 100 disclosed herein. All the cells included in the assembled battery 10 may be the non-aqueous electrolyte secondary cells 100 disclosed herein.

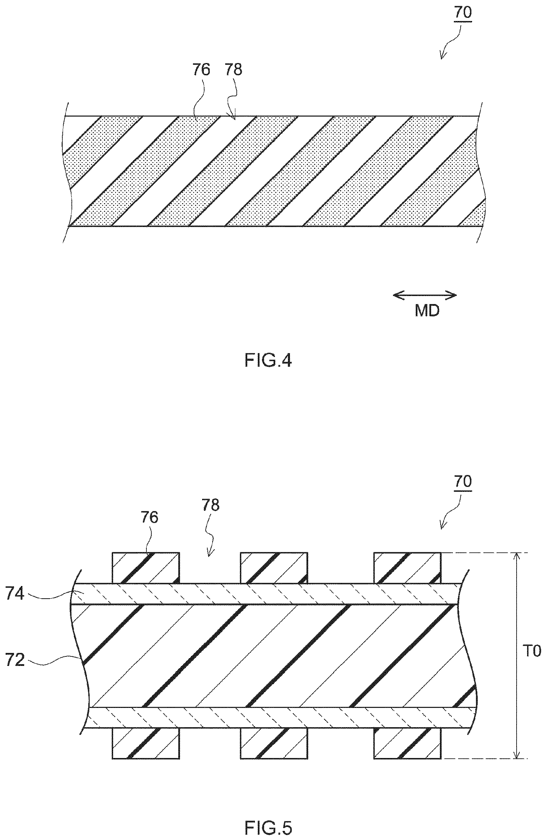

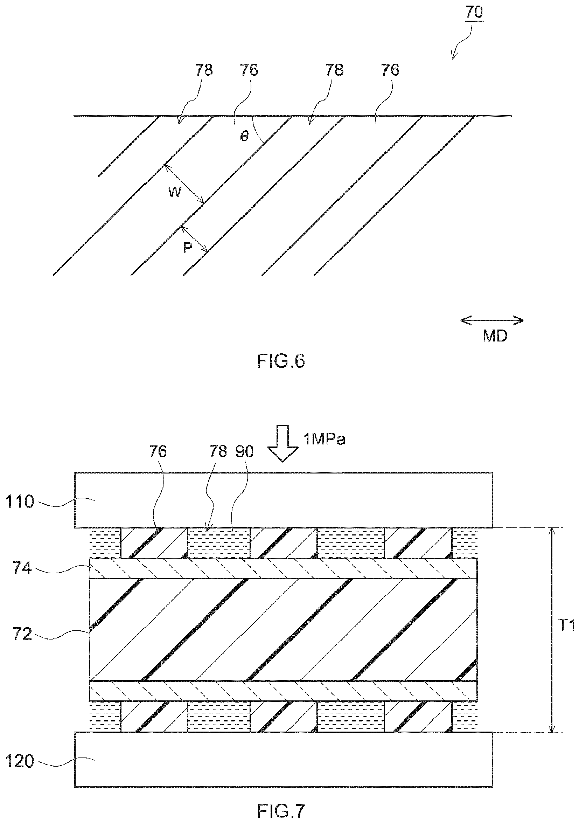

Hereinafter, the separator 70 disclosed herein will be described. FIG. 4 is a schematic view (top view) of the separator 70 according to an embodiment as seen in a direction vertical to a surface of the separator 70. FIG. 5 is a partial cross-sectional view of the separator 70 according to an embodiment. FIG. 6 is a partially enlarged view of the separator 70, showing a longer side and the vicinity thereof in FIG. 4.

As shown in FIG. 4 and FIG. 5, the separator 70 according to this embodiment includes a substrate 72 made of a porous resin, a heat resistant layer 74 containing inorganic particles, and an adhesive layer 76 containing an adhesive resin. The separator 70 is like a sheet, and has a pair of surfaces (main surfaces) facing each other. In FIG. 4, an MD direction represented by the arrow is a longitudinal direction of the separator 70. As shown in FIG. 4, the surfaces (main surfaces) of the separator 70 have the longer sides parallel to the MD direction. In the example shown in the figures, the separator 70 is lengthy so as to be easily produced continuously. The separator 70 is not limited to being lengthy, and may have any shape, for example, a square shape, a polygonal shape, an elliptical shape, a circular shape or the like as seen in the top view (planar view).

The porous resin forming the substrate 72 may be any known ion-permeable and insulating porous resin usable for a separator of a non-aqueous electrolyte secondary cell. Examples of such a resin include polyolefin, polyester, cellulose, polyamide, an ethylenepropylene copolymer and the like. Among these resins, polyolefin is preferred because the polyolefin provides the separator 70 with a so-called shutdown function. Examples of a preferred polyolefin include polyethylene (PE), polypropylene (PP) and the like.

The substrate 72 may have a single-layer structure, or a stacked structure including two or more layers (e.g., a three-layer structure including a PE layer and PP layers stacked on both of two surfaces of the PE layer).

The substrate 72 may have a thickness of, for example, 1 $\mu$m or greater and 20 $\mu$m or less, preferably 4 $\mu$m or greater and 15 $\mu$m or less, and still more preferably 4 $\mu$m or greater and 12 $\mu$m or less, for example, 6 $\mu$m or greater and 12 $\mu$m or less, although the substrate 72 may have any thickness with no specific limitation as long as the positive electrode 50 and the negative electrode 60 are insulated from each other. In the case where the thickness (film thickness) of the substrate 72 is 4 $\mu$m or greater, a sufficient strength is guaranteed to allow the non-aqueous electrolyte secondary cell 100 to have improved safety. In the case where the thickness of the substrate 72 is 15 $\mu$m or less, an inter-electrode distance between the positive electrode 50 and the negative electrode 60 is shortened to provide higher charge and discharge characteristics.

The substrate 72 may have a void ratio that is not specifically limited and is substantially the same as that of a known substrate of a separator of a non-aqueous electrolyte secondary cell. The void ratio of the substrate 72 may be, for example, 20% or higher and 70% or lower, preferably 30% or higher and 60% or lower, and still more preferably 40% or higher and 50% or lower. The void ratio of the substrate 72 may be measured by a mercury porosimetry method.

The substrate 72 may have an air permeability that is not specifically limited and is substantially the same as that of a known substrate of a separator of a non-aqueous electrolyte secondary cell. The air permeability, as a Gurley value, of the substrate 72 is, for example, 50 sec./100 mL or higher and 600 sec./100 mL or lower, and preferably 150 sec./100 mL or higher and 300 sec./100 mL or lower. The Gurley value of the substrate 72 may be measured by a method in compliance with JIS P8117 (2009).

As shown in FIG. 5, in the separator 70 according to this embodiment, the heat resistant layer 74 is formed on both of two surfaces of the substrate 72 in a thickness direction thereof. Alternatively, the heat resistant layer 74 may be formed in any manner. For example, the heat resistant layer 74 may be formed on one surface of the substrate 72, or may not be formed.

The inorganic particles contained in the heat resistant layer 74 may be of any type with no specific limitation. Examples of the inorganic particles include particles of oxide-based ceramic materials such as alumina ($Al_2O_3$), silica ($SiO_2$), titania ($TiO_2$), zirconia ($ZrO_2$), magnesia ($MgO$), ceria ($CeO_2$), zinc oxide ($ZnO$) and the like; particles of nitride-based ceramic materials such as silicon nitride, titanium nitride, boron nitride and the like; particles of metal hydroxides such as calcium hydroxide, magnesium hydroxide, aluminum hydroxide and the like; particles of clay mineral materials such as mica, talc, boehmite, zeolite, apatite, kaolin and the like; particles of sulfates such as barium sulfate, strontium sulfate and the like; glass fibers; and the like. Among these materials, particles of alumina and boehmite are preferably used. Alumina and boehmite have a high melting point and a superb heat resistance. Alumina and boehmite have a relatively high Mohs hardness and also a superb mechanical strength and a superb durability. In addition, alumina and boehmite are of relatively low cost and suppress cost of the materials.

The inorganic particles may have, for example, a spherical shape, a quadrangular prism shape or the like, although there is no specific limitation on the shape of the inorganic particles. The spherical inorganic particles may have an average particle diameter ($D_{50}$) of, for example, 0.1 $\mu$m or longer and 5 $\mu$m or shorter, preferably 0.3 $\mu$m or longer and 3 $\mu$m or shorter, and more preferably 0.5 $\mu$m or longer and 1.5 $\mu$m or shorter, although there is no specific limitation on the average particle diameter ($D_{50}$) of the spherical inorganic particles. In this specification, the "average particle diameter ($D_{50}$)" refers to a median diameter ($D_{50}$), and thus refers to a particle diameter corresponding to a cumulative frequency of 50% by volume from the shorter particle diameter side in a volume-based particle diameter distribution based on a laser diffraction and scattering method. Therefore, the average particle diameter ($D_{50}$) may be found by use of a known laser diffraction and scattering-type particle diameter distribution meter or the like. The quadrangular prism-shaped inorganic particles may have sides having an average length of preferably 0.1 $\mu$m to 1.5 $\mu$m, and more preferably 0.5 $\mu$m to 1.2 $\mu$m. The heat resistant layer 74 containing the inorganic particles having a size in such a range has a high ion permeability and a high durability.

The heat resistant layer 74 may contain a component other than the inorganic particles. Examples of such a component include a binder, a thickener and the like. Examples of the binder include fluorine-based polymers such as polytetrafluoroethylene (PTFE), poly(vinylidene fluoride) (PVdF) and the like; acrylic binders; rubber-based binders such as styrene butadiene rubber (SBR) and the like; polyolefin-based binders; and the like. Examples of the thickener include carboxymethylcellulose (CMC), methylcellulose (MC) and the like.

The heat resistant layer 74 contains the inorganic particles at a content that is preferably 85% by mass or higher and 99.9% by mass or lower, and more preferably 90% by mass or higher and 99.5% by mass or lower, although there is no specific limitation on the content of the inorganic particles. The heat resistant layer 74 contains the binder at a content that is preferably 0.1% by mass or higher and 15% by mass or lower, and more preferably 0.5% by mass or higher and 10% by mass or lower, although there is no specific limitation on the content of the binder.

The heat resistant layer 74 has an average thickness of, for example, 0.3 $\mu$m or greater and 6 $\mu$m or less, preferably 0.5 $\mu$m or greater and 4.5 $\mu$m or less, and more preferably 1 $\mu$m or greater and 2 $\mu$m or less, although there is no specific limitation on the average thickness of the heat resistant layer 74. The "average thickness" of the heat resistant layer 74 refers to an average thickness of the heat resistant layer 74 formed on one surface of the substrate 72. The average thickness of the heat resistant layer 74 may be measured by an observation with a cross-sectional SEM image or by use of a laser microscope.

The heat resistant layer 74 may have a void ratio that is not specifically limited and is substantially the same as that of a known heat resistant layer of a separator of a non-aqueous electrolyte secondary cell. The void ratio of the heat resistant layer 74 may be, for example, 30% or higher and 90% or lower, preferably 40% or higher and 80% or lower, and still more preferably 50% or higher and 70% or lower. The void ratio of the heat resistant layer 74 may be measured by a mercury porosimetry method.

The adhesive layer 76 is partially provided on one side of, or both of two sides of, the substrate 72 in the thickness direction thereof. In this embodiment, as shown in FIG. 5, the adhesive layer 76 is provided on a surface of the heat resistant layer 74 provided on each of the two sides of the substrate 72 in the thickness direction thereof. The adhesive layer 76 causes the separator 70 and the electrodes to strongly adhere to each other, and therefore, keeps the inter-electrode distance (i.e., a distance between the positive electrode 50 and the negative electrode 60) uniform. This suppresses deposition of metal lithium and stay of generated gas, which are caused by a non-uniform inter-electrode distance. Therefore, it is sufficient that the adhesive layer 76 is provided at an outermost surface of the separator 70. For example, the adhesive layer 76 may be provided directly on the surface of the substrate 72 without the heat resistant layer 74 being provided between the substrate 72 and the adhesive layer 76.

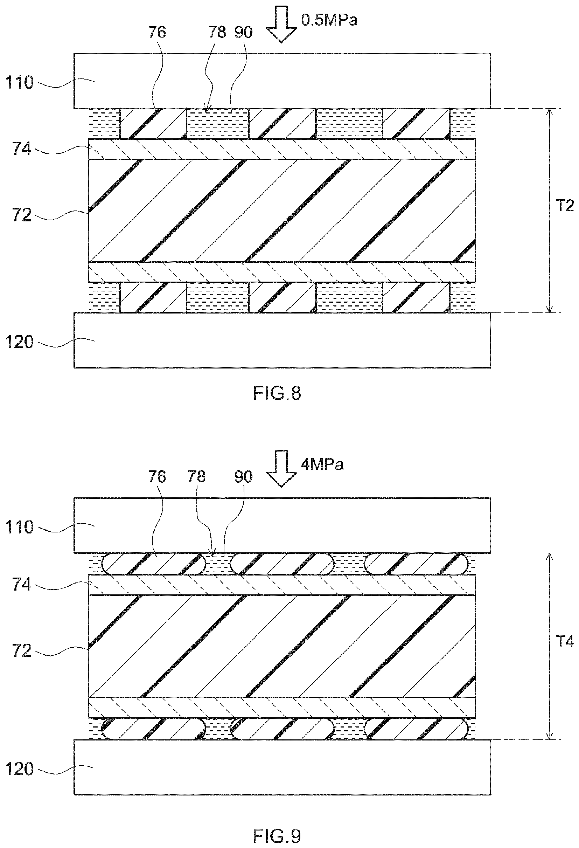

As described above, the adhesive layer 76 is partially provided on the surfaces of the substrate 72, not on the entirety of the surfaces thereof. With such a structure, when being supplied with a predetermined pressure in the thickness direction of the separator 70, the adhesive layer 76 is spread into regions where the adhesive layer 76 is not provided (adhesive layer non-formation regions 78) (see FIG. 9 referred to below). As a result, the pressure is dispersed in a direction different from the thickness direction (dispersed in, for example, a direction vertical to the thickness direction) to decrease (alleviate) the pressure applied in the thickness direction. Although the negative electrode 60 has a film thickness (volume) thereof increased and the expansion pressure of the electrode assembly 20 is increased by the repeated charge and discharge of the non-aqueous electrolyte secondary cell 100, use of the separator 70 disclosed herein alleviates such an expansion pressure. In other words, a counterforce against the expansion pressure of the electrode assembly 20 is decreased.

On the side(s) of the substrate 72 on which the adhesive layer 76 is provided, the adhesive layer 76 may occupy a surface area at a ratio of, for example, 35% or higher and lower than 85%, and preferably 40% or higher and 80% or lower, for example, 40% or higher and 60% or lower, with respect to the surfaces of the substrate 72. In the case where the ratio of the surface area occupied by the adhesive layer 76 is 35% or higher, a sufficient adhesive force is guaranteed between the separator 70 and the electrodes. In the case where the ratio of the surface area occupied by the adhesive layer 76 is lower than 85%, the regions into which the adhesive layer 76 is allowed to be spread (the adhesive layer non-formation regions 78), when the pressure is applied in the thickness direction of the separator 70, are enlarged. Therefore, the expansion pressure of the electrode assembly 20 caused by the charge is preferably alleviated.

In this embodiment, the adhesive layer 76 is provided at a predetermined pitch so as to form a striped pattern as an example of formation pattern thereof. Therefore, as shown in the figures, the adhesive layer 76 is formed as protrusion portions extending in one direction, and the adhesive layer non-formation regions 78 are formed as recessed portions between stripe portions of the adhesive layer 76 that are adjacent to each other. In other words, regions where the adhesive layer 76 is formed and regions where the adhesive layer 76 is not formed (the adhesive layer non-formation regions 78) are provided alternately at the surfaces of the separator 70. The regions where the adhesive layer 76 is provided, and the adhesive layer non-formation regions 78, are formed alternately in this manner. With such a structure, when a pressure is applied in the thickness direction of the separator 70, the adhesive layer 76 is spread into the adhesive layer non-formation regions 78 adjacent thereto on both of two sides of the adhesive layer 76. Therefore, such a pressure is preferably decreased. The adhesive layer non-formation regions 78 are permitted to have a trace amount of adhesive component attached thereto (for example, the adhesive layer non-formation regions 78 are permitted to be covered with an adhesive component at a ratio of 5% or lower, preferably 1% or lower) because of technological limits in terms of production or the like.

In this embodiment, the striped pattern of the adhesive layer 76 is formed as an oblique striped pattern. The adhesive layer 76 is formed so as to have an acute angle with respect to the longer sides of the surfaces of the separator 70 (i.e., referring to FIG. 6, angle $\theta$ is in the range of $0° < \theta < 90°$). From the point of view of ease of injection of the electrolyte solution, the angle $\theta$ between the adhesive layer 76 and the longer sides of the surfaces of the separator 70 may be, for example, 20° or larger and 70° or smaller, preferably 30° or larger and 65° or smaller, and more preferably 45° or larger and 60° or smaller. In this embodiment, the adhesive layer 76 is formed as having an oblique striped pattern. Alternatively, the adhesive layer 76 may be formed as having a striped pattern parallel to, or perpendicular to, the longer sides of the surfaces of the separator 70.

The adhesive layer 76 has a width (i.e., a size in a direction vertical to a direction in which the adhesive layer 76 extends; size W in FIG. 6) of, for example, 1 mm or wider and 4 mm or narrower, and preferably 2 mm or wider and 4 mm or narrower, for example, 2 mm or wider and 3 mm or narrower, although there is no specific limitation on the width of the adhesive layer 76.

An inter-stripe portion distance between the stripe portions of the adhesive layer 76 (i.e., a width of a gap between the stripe portions of the adhesive layer 76; size P in FIG. 6) is, for example, 1 mm or longer and 4 mm or shorter, and preferably 2 mm or longer and 3 mm or shorter, although there is no specific limitation on the inter-stripe portion distance.

The adhesive layer 76 has an average thickness (i.e., a size in the direction vertical to the surfaces of the separator 70) of preferably 1 $\mu$m or greater and less than 4 $\mu$m, more preferably 1 $\mu$m or greater and 3 $\mu$m or less, and still more preferably 2 $\mu$m or greater and 3 $\mu$m or less. In the case where the average thickness of the adhesive layer 76 is 1 $\mu$m or greater, the adhesive layer 76 is easily spread toward the adhesive layer non-formation regions 78 when being supplied with a pressure in the thickness direction of the separator 70. Therefore, the pressure is preferably alleviated. In the case where the average thickness of the adhesive layer 76 is less than 4 $\mu$m, lithium ions are diffused with higher ease while the non-aqueous electrolyte secondary cell 100 is charged, and therefore, superb cell characteristics are guaranteed. The thickness of the adhesive layer 76 may be measured by an observation with a cross-sectional SEM image or by use of a laser microscope.

In a preferred example of the separator 70 including the adhesive layer 76 having a striped pattern, the adhesive layer 76 has an average thickness of 2 $\mu$m to 3 $\mu$m, a width of 2 mm to 3 mm, and an inter-stripe portion distance of 2 mm to 3 mm. In the case where these ranges are all satisfied, the pressure applied in the thickness direction is alleviated at an especially high level.

In the example shown in FIG. 5, the adhesive layer 76 has a rectangular cross-section. The rectangular cross-section allows the adhesive layer 76 to be in contact with the electrodes along a large surface area. The cross-section of the adhesive layer 76 is not limited to being rectangular, and may have any shape as long as the adhesive layer 76 is capable of causing the electrodes and the separator 70 to adhere to each other.

The adhesive layer 76 contains an adhesive component. The adhesive component is of any type with no specific limitation as long as being capable of causing the electrodes and the separator 70 to adhere to each other. The adhesive component is typically an adhesive resin, and examples of the adhesive resin include diene-based rubber materials such as poly(vinylidene fluoride) (PVdF), styrene butadiene rubber (SBR), acrylonitrile-butadiene rubber (NBR), acry-

Ionitrile-butadiene-styrene rubber (NSBR), and the like; (meth)acrylic resins such as polyacrylic acid, a butylacrylate-ethylhexylacrylate copolymer, a methylmethacrylate-ethylhexylacrylate copolymer, and the like; cellulose derivatives such as carboxymethylcellulose, hydroxyalkylcellulose, and the like; polyacrylonitrile; poly(vinyl chloride); polyvinylalcohol; polyvinylbutyral; polyvinylpyrrolidone; and the like. The adhesive layer 76 may contain one of these adhesive resins independently, or may contain two or more thereof. Among these materials, poly(vinylidene fluoride) (PVdF) is preferred from the point of view of the adhesiveness with the separator 70 and with the electrodes and the point of view of preventing adverse influence on the cell characteristics.

The adhesive layer 76 may contain only such an adhesive component, or may further contain a component other than the adhesive component (in other words, may contain another component). Examples of such another component include additives such as inorganic particles, a defoaming agent, a surfactant, a wetting agent, a pH adjusting agent, and the like. For example, the inorganic particles contained in the adhesive layer 76 improve the heat resistance of the separator 70. As the inorganic particles, any type of inorganic particles described above as those that may be contained in the heat resistant layer 74 may be used. In the case of being contained in the adhesive layer 76, the inorganic particles may be contained at a ratio of 40% by weight or lower, and preferably 30% by weight or lower, with respect to the entirety of the adhesive layer 76.

In the case where the adhesive layer 76 contains a component other than the adhesive component, the adhesive component may be contained at a ratio of 60% by weight or higher, and preferably 70% by weight or higher, for example, 80% by weight or higher or 90% by weight or higher, with respect to the entirety of the adhesive layer 76. With such a range, the adhesive layer 76 is guaranteed to have a high adhesiveness.

In the example shown in the figures, the separator 70 includes only three types of layers, specifically, the substrate 72, the heat resistant layer 74 and the adhesive layer 76. Alternatively, the separator 70 may further include a layer other than the substrate 72, the heat resistant layer 74 and the adhesive layer 76 as long as the effects of the technology disclosed herein are not significantly inhibited.

Hereinafter, parameters of the separator 70 disclosed herein will be described. FIG. 7 is a schematic view of the separator 70 in a state of being impregnated with the electrolyte solution and supplied with a pressure of 1 MPa in the thickness direction of the separator 70. FIG. 8 is a schematic view of the separator 70 in a state of being impregnated with the electrolyte solution and supplied with a pressure of 0.5 MPa in the thickness direction of the separator 70. FIG. 9 is a schematic view of the separator 70 in a state of being impregnated with the electrolyte solution and supplied with a pressure of 4 MPa in the thickness direction of the separator 70.

As shown in FIG. 5, an initial thickness T0 of the separator 70 is a thickness thereof before the separator 70 is impregnated with the electrolyte solution. The initial thickness T0 of the separator 70 is, for example, 2 $\mu$m or greater and 30 $\mu$m or less, preferably 10 $\mu$m or greater and 22.5 $\mu$m or less, more preferably 16 $\mu$m or greater and 22.5 $\mu$m or less, and still more preferably 19 $\mu$m or greater and 22.5 $\mu$m or less. In the case where the initial thickness T0 of the separator 70 is 10 $\mu$m or greater, a sufficient strength is guaranteed to allow the non-aqueous electrolyte secondary cell 100 to have improved safety. In the case where the initial thickness T0 of the separator 70 is 22.5 $\mu$m or less, the inter-electrode distance between the positive electrode 50 and the negative electrode 60 is shortened to provide superb charge and discharge characteristics. The "initial thickness T0" of the separator 70 refers to an average thickness measured in compliance with JIS Z1702.

As shown in FIG. 7, a thickness T1 of the separator 70 is a thickness thereof in a state where the separator 70 is impregnated with the electrolyte solution and supplied with a pressure of 1 MPa in the thickness direction thereof. The thickness T1 of the separator 70 is, for example, 10 $\mu$m or greater and 25 $\mu$m or less, preferably 16 $\mu$m or greater and 24 $\mu$m or less, and more preferably 20 $\mu$m or greater and 24 $\mu$m or less. As a result of the separator 70 being impregnated with the electrolyte solution, the electrolyte solution permeates into the porous separator 70. The electrolyte solution also permeates into the adhesive layer non-formation regions 78_(in FIG. 7, the electrolyte solution is represented by the reference sign 90). In FIG. 7, the separator 70 is supplied with the pressure of 1 MPa in a state of being sandwiched, in the thickness direction, between a first pressurizing element 110 and a second pressurizing element 120. The first pressurizing element 110 and the second pressurizing element 120 are shown to illustrate the state of the separator 70 while being supplied with the pressure, and do not influence the contents of the technology disclosed herein. The thickness T1 of the separator 70 corresponds to a thickness thereof in a state where the electrolyte solution is injected into the non-aqueous electrolyte secondary cell 100 and then the non-aqueous electrolyte secondary cell 100 is assembled with other cells to form an assembled battery. The thickness T1, and thicknesses T2 and T4 described below, of the separator 70 may be measured as follows. Plural test pieces (50 pieces or more, for example, 150 pieces) of the separator 70 in a stacked state are impregnated with the electrolyte solution, and then are pressurized by a commercially available autograph device. A specific measuring method will be described in test examples below.

When the separator 70 is impregnated with the electrolyte solution, the electrolyte solution permeates into the separator 70, and as a result, the separator 70 (especially, the adhesive layer 76) may swell, or a liquid phase because of the electrolyte solution 90 or a gas phase may be generated on each of the surfaces of the separator 70 (between the separator 70 and the layer adjacent to each of the surfaces of the separator 70). This tends to make the thickness T1 of the separator 70 greater than the initial thickness T0 thereof. A value obtained by dividing the thickness T1 of the separator 70 by the initial thickness T0 thereof (i.e., T1/T0) is preferably 1 or larger and 1.1 or smaller, and more preferably 1 or larger and 1.05 or smaller. In the case where the value of T1/T0 is 1 or larger, the non-aqueous electrolyte secondary cells 100, when being assembled together to form an assembled battery, are restrained stably with no need to significantly narrow the distance between the pair of restraining plates. In the case where the value of T1/T0 is 1.1 or smaller, an amount of gas entrained between the separator 70 and the layer adjacent to each of the surfaces of the separator 70 is decreased.

The thickness T2 of the separator 70 is a thickness thereof in a state where the separator 70 is impregnated with the electrolyte solution and then supplied with a pressure of 2 MPa in the thickness direction thereof for 1 hour, and then the pressure is decreased to 0.5 MPa. It is preferred that the thickness T2 is less than the thickness T1 of the separator 70. The thickness T2 of the separator 70 corresponds to a thickness thereof in a state after an assembled battery is formed and is subjected to initial charge and discharge. Specifically, the pressure of 2 MPa applied to the separator 70 for 1 hour corresponds to a pressure applied to the separator 70 by the negative electrode 60 expanded by being charged. The state where the pressure is decreased to 0.5 MPa corresponds to a state after the discharge, more specifically, corresponds to a pressure applied to the separator 70 by the negative electrode 60 having an increased volume as a result of the initial charge and discharge. Namely, the thickness T2 of the separator 70 corresponds to a thickness thereof when the BOL counterforce is generated. In the case where the BOL counterforce is too small, the assembled battery has a poor assembling stably. Therefore, in a state where the BOL counterforce may be generated, the separator 70 is required not to alleviate the expansion pressure of the electrode assembly 20 too much. Thus, it is preferred that the thickness T2 of the separator 70 is not too smaller than the thickness T1. For this reason, a value obtained by dividing the thickness T2 of the separator 70 by the thickness T1 (i.e., T2/T1) is preferably 0.92 or larger and 1 or smaller, more preferably 0.94 or larger and 1 or smaller, and still more preferably 0.95 or larger and 1 or smaller. In the case where the value of T2/T1 is 1 or smaller, gas generated at the time of the initial charge and discharge is guaranteed to be removed easily.

The thickness T4 of the separator 70 is a thickness thereof in a state where, after the above-described operation performed to measure the thickness T2, the separator 70 is supplied with a pressure of 4 MPa in the thickness direction thereof, and the pressure is kept for 48 hours. A value obtained by dividing the thickness T4 by the thickness T1 (i.e., T4/T1) is preferably 0.6 or larger and 0.8 or smaller, more preferably 0.7 or larger and 0.77 or smaller, and still more preferably 0.74 or smaller and 0.77 or smaller. The thickness T4 corresponds to a thickness of the separator 70 in a state where after the assembled battery 10 (non-aqueous electrolyte secondary cells 100) is repeatedly charged and discharged, the separator 70 is pressed by the negative electrode 60 having an increased film thickness. Unless the expansion pressure increased by the repeated charge and discharge is sufficiently alleviated, the cell performance is easily deteriorated or the cell life is easily shortened, which may undesirably decrease the safety. In the case where the value of T4/T1 is 0.8 or smaller, the expansion pressure of the negative electrode 60 is preferably alleviated to guarantee higher safety. As shown in FIG. 9, when the separator 70 disclosed herein is supplied with a pressure (4 MPa in this embodiment) in the thickness direction thereof, the adhesive layer 76 is spread into the adhesive layer non-formation regions 78. In this manner, the pressure is preferably alleviated. In the case where the value of T4/T1 is 0.6 or larger, the thickness of the separator 70 is suppressed from changing, and the thickness of the separator 70 is suppressed from being non-uniform. Therefore, the distance between the electrodes is kept relatively uniform. This provides a relatively uniform inter-electrode resistance, and thus provides stable charge and discharge characteristics.

The separator 70 may be produced by a known method. In an example, the separator 70 shown in the figures is produced as follows. For example, first, a sheet-like porous resin substrate acting as the substrate 72 is prepared. The porous resin substrate is preferably a lengthy substrate. A slurry to be formed into a heat resistant layer containing inorganic particles is applied to the porous resin substrate and dried to form a stacked body including the heat resistant layer 74.

Next, a coating liquid containing an adhesive component and a solvent is prepared and applied to the stacked body. In this embodiment, at this point, the coating liquid is applied to the stacked body at a predetermined pitch so as to form a striped pattern. Such application may be performed by use of, for example, a roll coater or the like including a gravure roll having a groove oblique with respect to a rotation direction thereof.

The applied coating liquid is dried to form the adhesive layer 76. As a result, the separator 70 is formed. The method for producing the separator 70 is not limited to this.

The structure of the separator 70 and the structures of the non-aqueous electrolyte secondary cell 100 and the assembled battery 10 have been described. The separator 70 is preferably used for a lithium ion secondary cell. The lithium ion secondary cell is usable for various uses. Specific uses include portable power sources of personal computers, mobile electronic devices, mobile terminals, and the like; driving power sources for vehicles such as battery electric vehicles (BEVs), hybrid electric vehicles (HEVs), plug-in hybrid electric vehicles (PHEVs), and the like; electric power storage cells such as compact electric power storage devices, and the like; etc. Among these uses, the driving power sources for vehicles are preferred.

As an example, the quadrangular non-aqueous electrolyte secondary cell 100 including the flat wound electrode assembly 20 is described above. Alternatively, the non-aqueous electrolyte secondary cell disclosed herein may be structured as a non-aqueous electrolyte secondary cell including a stacked electrode assembly (i.e., an electrode assembly including plural positive electrodes and plural negative electrodes stacked alternately). The stacked electrode assembly may include plural separators such that each of the separators is sandwiched between each of the positive electrodes and a corresponding negative electrode, or may include one separator that is folded so as to be sandwiched between the positive electrodes and the negative electrodes stacked on each other.

The non-aqueous electrolyte secondary cell disclosed herein may be structured as a coin-shaped cell, a button-shaped cell, a cylindrical cell or a laminated case-shaped_cell. The non-aqueous electrolyte secondary cell disclosed herein may be structured according to a known method as a non-aqueous electrolyte secondary cell other than the lithium ion secondary cell.

In the above embodiment, the adhesive layer 76 is formed to have a striped pattern. The adhesive layer 76 is not limited to having such a striped pattern. The adhesive layer 76 merely needs to be partially formed at the outermost surface of the separator 70. Preferably, the adhesive layer 76 is formed intermittently. For example, it is preferred that the plural (at least two) portions of the adhesive layer 76 and the plural (at least two) adhesive layer non-formation regions 78 are located alternately. With such a structure, when a pressure is applied, the adhesive layer 76 is spread into the adhesive layer non-formation regions 78 in a wider angle. Therefore, the pressure is preferably alleviated. Such a pattern of the adhesive layer 76 may be, for example, a dot pattern, a lattice pattern or the like.

Hereinafter, examples of the technology disclosed herein will be described. The technology disclosed herein is not limited to any of the following examples.

Production of separators

Example 1

As a substrate, a polyethylene porous film having a thickness of 12 $\mu$m was prepared. For forming a heat resistant layer, a slurry containing, as a main component, quadrangular prism-shaped boehmite particles having sides having an average length of 0.5 $\mu$m (containing the boehmite particles at a ratio of 85% by mass or higher) was prepared. The slurry was applied to both of two surfaces of the substrate and dried to form the heat resistant layer on the substrate. The heat resistant layer thus formed had a thickness of 2 $\mu$m on each of the two surfaces.

Next, a coating liquid, to be formed into an adhesive layer, containing poly(vinylidene fluoride) (PVdF) dissolved in N-methyl-2-pyrrolidone (NMP) was prepared. This coating liquid was applied to a surface of the heat resistant layer formed on each of the two surfaces of the substrate by a printing method so as to have a striped pattern, and was dried. As a result, the adhesive layer was formed. Specifically, the coating liquid was applied such that the adhesive layer would have a thickness of 1 $\mu$m, such that each of stripes of the striped pattern of the adhesive layer would have a width (stripe width) of 4 mm, such that a gap in the adhesive layer (each of adhesive layer non-formation regions) would have a width of 1 mm, and such that the adhesive layer would have an angle of 45° with respect to a longitudinal direction of the separator. In this manner, a separator 70 in example 1 was produced.

Example 2

A separator in example 2 was produced in substantially the same manner as in example 1 except that the thickness of the adhesive layer was 2 $\mu$m, that the width of the adhesive layer was 3 mm, and that the width of the gap in the adhesive layer was 2 mm.

Example 3

A separator in example 3 was produced in substantially the same manner as in example 1 except that the thickness of the adhesive layer was 3 $\mu$m, that the width of the adhesive layer was 2 mm, and that the width of the gap in the adhesive layer was 3 mm.

Example 4

A separator in example 4 was produced in substantially the same manner as in example 1 except that the thickness of the adhesive layer was 3 $\mu$m.

Example 5

A separator in example 5 was produced in substantially the same manner as in example 1 except that the heat resistant layer was formed on only one of the surfaces of the substrate. On the surface of the substrate on which the heat resistant layer was not formed, the adhesive layer was directly formed.

Example 6

A separator in example 6 was produced in substantially the same manner as in example 3 except that the heat resistant layer was formed on only one of the surfaces of the substrate. On the surface of the substrate on which the heat resistant layer was not formed, the adhesive layer was directly formed.

Example 7

A separator in example 7 was produced in substantially the same manner as in example 2 except that no heat resistant layer was formed and that the adhesive layer was formed on both of the two surfaces of the substrate.

Example 8

A separator in example 8 was produced in substantially the same manner as in example 1 except that a polyethylene porous film having a thickness of 6 $\mu$m was used as the substrate and that the thickness of the heat resistant layer was 1 $\mu$m.

Example 9

A coating liquid, to be formed into an adhesive layer, containing PVdF and quadrangular prism-shaped boehmite particles, having sides having an average length of 0.5 $\mu$m, mixed in NMP such that the PVdF and the quadrangular prism-shaped boehmite particles would have a mass ratio of 70:30 was prepared. This coating liquid to be formed into the adhesive layer was used to form the adhesive layer on both of two surfaces of a substrate with no heat resistant layer. The adhesive layer was formed so as to have a striped pattern substantially the same as that of the adhesive layer in example 1. A separator in example 9 was produced in substantially the same manner as in example 1 except for these points.

Examples 10 and 11

Separators in examples 10 and 11 were produced in substantially the same manner as in example 1 except that the adhesive layer was formed on the entirety of the surface of each of the heat resistant layers. Namely, the adhesive layer was formed as a flat layer with no gap (a so-called solid-coated layer).

Examples 12 and 13

Separators in examples 12 and 13 were produced in substantially the same manner as in example 1 except that the thickness of the adhesive layer was 0.5 $\mu$m.

Examples 14 and 15

Separators in examples 14 and 15 were produced in substantially the same manner as in example 8 except that the adhesive layer was formed on the entirety of the surface of each of the heat resistant layers. Namely, the adhesive layer was formed as a flat layer with no gap (a so-called solid-coated layer).

Examples 16 and 17

Only the substrate in example 1 was used as a separator in each of examples 16 and 17.

Measurement of the ratio of the surface area occupied by the adhesive layer

Surfaces of each of the separators were observed by use of an optical microscope produced by Keyence Corporation (model No. VHX-600) to find the ratio of the surface area occupied by the adhesive layer with respect to each of the surfaces of the substrate. Specifically, the ratio of the surface area occupied by the adhesive layer was found as follows. Each surface of the separator was observed at a magnification at which an average ratio of the surface area occupied by the adhesive layer could be determined, and the darkness/lightness of the color of the observed image was binarized, to find the surface area of the adhesive layer formed of the coating liquid. Then, the surface area of the adhesive layer was divided by the surface area of the entirety of the observed image to find the ratio of the surface area occupied by the adhesive layer. The results are shown in Table 1.

Measurement of the height (thickness) of the adhesive layer formed of the coating liquid

The height (thickness) of the adhesive layer formed of the coating liquid in each of the examples was measured from a cross-sectional SEM image. The average height of the adhesive layer was measured based on an average boundary between the adhesive layer and the substrate (or the heat resistant layer) obtained from the cross-sectional SEM image.

Measurement of the thickness of the separator and the thickness of the separator including the liquid phase

In each of the examples, the initial thickness $T0$ of the separator produced above was found by a measuring method in compliance with JIS Z1702 by use of a constant-pressure thickness gauge PG-02J produced by Teclock Co., Ltd. Specifically, ten samples each including a stack of three separators produced above were prepared. Each of the samples was placed on a stone surface plate, and a gauge head having a diameter of 5 mm was pressed to the sample at a pressure of 1.22 N. The stacked film thickness of the sample at this point was measured. The stacked film thickness was measured at three positions for each sample. An average value of a total of 30 film thicknesses thus obtained was found, and the obtained average value was converted into a film thickness of one separator. Thus, the initial thickness $T0$ was found.

Next, in each of the examples, 150 separators produced above were stacked and cut into a piece having a width of 80 mm and a length of 150 mm. The piece was put into a laminated bag produced by Seisannipponsha Ltd. (model No. AL-18). 54 mL of electrolyte solution was injected into the laminated bag, and an opening of the laminated bag was sealed by heat welding, to produce a sample. Such a sample was left overnight, and then was placed on an aluminum block having a width of 150 mm and a depth of 83.5 mm. At this point, the sample was placed such that a longitudinal direction of the sample would make a right angle with respect to a longitudinal direction of the aluminum block. Next, a predetermined pressure was applied to the sample in a thickness direction (a stacking direction) thereof based on a first pressure application program and a second pressure application program described below by use of an autograph device produced by Shimadzu Corporation (model No. AG-50kNX) to find a stress-strain curve. The sample to which the pressure was applied had a surface area of 80 mm × 83.5 mm. Hereinafter, the first pressure application program and the second pressure application program, and also the thicknesses (total thicknesses of the liquid phase and the separator) $T1$, $T2$ and $T4$ under predetermined pressure conditions, will be described.

According to the first pressure application program, the sample was supplied with a pressure as follows. The pressure was increased to a target pressure of 12512 N (corresponding to 2 MPa) at a rate of 104 N/sec. The pressure was kept at the target pressure for 1 hour, and then was decreased to 300 N at a rate of 104 N/sec. A jig strain of the autograph device and a thickness strain of the laminated bag were corrected based on the obtained stress-strain curve to find a change in the film thickness of the 150 separators. The obtained result was divided by 150 to find a thickness of one separator. During such an operation, the thickness of the separator when the pressure reached 1 MPa while being increased was set as $T1$, and the thickness of the separator when the pressure reached 0.5 MPa while being decreased was set as $T2$.

Next, the sample already supplied with the pressure based on the first pressure application program was supplied with a pressure according to the second pressure application program as follows. The pressure was increased to a target pressure of 25024 N (corresponding to 4 MPa) at a rate of 104 N/sec. The pressure was kept at the target pressure for 48 hours, and then was decreased to 300 N at a rate of 104 N/sec. The thickness of the separator immediately after the pressure was kept at the target pressure for 48 hours (before the pressure was decreased) was set as $T4$.

From the values of the thicknesses $T0$, $T1$, $T2$ and $T4$ obtained as described above, values of $T1/T0$, $T2/T1$ and $T4/T1$ were calculated. Table 1 shows values of $T0$, $T1$, $T2$ and $T4$, and the values of $T1/T0$, $T2/T1$ and $T4/T1$.

[Table 1]

| | SUR-FACE ON WHICH ADHE-SIVE LAY-ER IS FORMED | THICK-NESS OF ADHE-SIVE LAY-ER ON ONE SUR-FACE (μm) | PAT-TERN OF ADHE-SIVE LAYER | STRIPED ADHE-SIVE LAYER | | RATIO OF SUR-FACE AREA OF ADHE-SIVE LAYER (%) | COMPOSI-TION OF AD-HESIVE LAY-ER | SUR-FACE ON WHICH HEAT RE-SISTANT LAYER IS FORMED | THICK-NESS OF HEAT RE-SISTANT LAYER ON ONE SUR-FACE (μm) | THICK-NESS RESIN OF RESIN SUB-STRATE (μm) | T0 (μm) | T1 (μm) | T2 (μm) | T4 (μm) | T1/T0 | T2/T1 | T4/T1 |
|---|---|---|---|---|---|---|---|---|---|---|---|---|---|---|---|---|---|
| | | | | WIDTH OF ADHESIVE LAYER (mm) | WIDTH OF GAP IN ADHE-SIVE LAYER (mm) | | | | | | | | | | | | |
| EXAM-PLE 1 | TWO SURFAC-ES | 1 | STRIPED | 4 | 1 | 80 | PVdF | TWO SURFACES | 2 | 12 | 17.58 | 18.09 | 17.17 | 14.41 | 1.03 | 0.95 | 0.80 |
| EXAM-PLE 2 | TWO SURFAC-ES | 2 | STRIPED | 3 | 2 | 60 | PVdF | TWO SURFACES | 2 | 12 | 19.92 | 20.80 | 19.80 | 16.05 | 1.04 | 0.95 | 0.77 |
| EXAM-PLE 3 | TWO SURFAC-ES | 3 | STRIPED | 2 | 3 | 40 | PVdF | TWO SURFACES | 2 | 12 | 22.27 | 23.36 | 22.29 | 17.50 | 1.05 | 0.95 | 0.75 |
| EXAM-PLE 4 | TWO SURFAC-ES | 3 | STRIPED | 4 | 1 | 80 | PVdF | TWO SURFACES | 2 | 12 | 22.00 | 22.68 | 21.05 | 17.90 | 1.03 | 0.93 | 0.79 |
| EXAM-PLE 5 | TWO SURFAC-ES | 1 | STRIPED | 4 | 1 | 80 | PVdF | ONE SURFACE | 2 | 12 | 16.00 | 16.29 | 15.29 | 12.46 | 1.02 | 0.94 | 0.77 |
| EXAM-PLE 6 | TWO SURFAC-ES | 3 | STRIPED | 2 | 3 | 40 | PVdF | ONE SURFACE | 2 | 12 | 20.00 | 20.82 | 19.88 | 15.47 | 1.04 | 0.96 | 0.74 |
| EXAM-PLE 7 | TWO SURFAC-ES | 2 | STRIPED | 3 | 2 | 60 | PVdF | NOT FORMED | - | 12 | 16.00 | 16.22 | 15.02 | 12.22 | 1.01 | 0.93 | 0.75 |
| EXAM-PLE 8 | TWO SURFAC-ES | 1 | STRIPED | 4 | 1 | 80 | PVdF | TWO SURFACES | 1 | 6 | 10.03 | 10.33 | 9.69 | 8.02 | 1.03 | 0.94 | 0.78 |

| | SURFACE ON WHICH ADHESIVE LAYER IS FORMED | THICKNESS OF ADHESIVE LAYER ON ONE SURFACE (μm) | PATTERN OF ADHESIVE LAYER | STRIPED ADHESIVE LAYER | | RATIO OF SURFACE AREA OF ADHESIVE LAYER (%) | COMPOSITION OF ADHESIVE LAYER | SURFACE ON WHICH HEAT RESISTANT LAYER IS FORMED | THICKNESS OF HEAT RESISTANT LAYER ON ONE SURFACE (μm) | THICKNESS RESIN OF RESIN SUBSTRATE (μm) | T0 (μm) | T1 (μm) | T2 (μm) | T4 (μm) | T1/T0 | T2/T1 | T4/T1 |
|---|---|---|---|---|---|---|---|---|---|---|---|---|---|---|---|---|---|
| | | | | WIDTH OF ADHESIVE LAYER (mm) | WIDTH OF GAP IN ADHESIVE LAYER (mm) | | | | | | | | | | | | |
| EXAMPLE 9 | TWO SURFACES | 1 | STRIPED | 4 | 1 | 80 | PVdF+BOEHMITE | NOT FORMED | - | 12 | 15.95 | 16.74 | 15.90 | 13.39 | 1.05 | 0.95 | 0.80 |
| EXAMPLE 10 | TWO SURFACES | 1 | SOLID | - | - | 100 | PVdF | TWO SURFACES | 2 | 12 | 18.04 | 18.61 | 17.60 | 15.30 | 1.03 | 0.95 | 0.82 |
| EXAMPLE 11 | TWO SURFACES | 1 | SOLID | - | - | 100 | PVdF | TWO SURFACES | 2 | 12 | 18.03 | 18.62 | 17.60 | 15.30 | 1.03 | 0.95 | 0.82 |
| EXAMPLE 12 | TWO SURFACES | 0.5 | STRIPED | 4 | 1 | 80 | PVdF | TWO SURFACES | 2 | 12 | 17.12 | 17.53 | 16.58 | 14.30 | 1.02 | 0.96 | 0.82 |
| EXAMPLE 13 | TWO SURFACES | 0.5 | STRIPED | 4 | 1 | 80 | PVdF | TWO SURFACES | 2 | 12 | 17.10 | 17.53 | 16.57 | 14.29 | 1.03 | 0.95 | 0.82 |
| EXAMPLE 14 | TWO SURFACES | 1 | SOLID | - | - | 100 | PVdF | TWO SURFACES | 1 | 6 | 10.02 | 10.24 | 9.72 | 8.25 | 1.02 | 0.95 | 0.81 |
| EXAMPLE 15 | TWO SURFACES | 1 | SOLID | - | - | 100 | PVdF | TWO SURFACES | 1 | 6 | 10.00 | 10.26 | 9.72 | 8.26 | 1.03 | 0.95 | 0.81 |
| EXAMPLE 16 | NOT FORMED | - | - | - | - | 0 | - | NOT FORMED | - | 12 | 12.62 | 12.49 | 11.77 | 10.59 | 0.99 | 0.94 | 0.85 |

(continued)

| | SURFACE ON WHICH ADHESIVE LAYER IS FORMED | THICKNESS OF ADHESIVE LAYER ON ONE SURFACE (μm) | PATTERN OF ADHESIVE LAYER | STRIPED ADHESIVE LAYER | | RATIO OF SURFACE AREA OF ADHESIVE LAYER (%) | COMPOSITION OF ADHESIVE LAYER | SURFACE ON WHICH HEAT RESISTANT LAYER IS FORMED | THICKNESS OF HEAT RESISTANT LAYER ON ONE SURFACE (μm) | THICKNESS RESIN OF RESIN SUBSTRATE (μm) | T0 (μm) | T1 (μm) | T2 (μm) | T4 (μm) | T1/T0 | T2/T1 | T4/T1 |
|---|---|---|---|---|---|---|---|---|---|---|---|---|---|---|---|---|---|
| | | | | WIDTH OF ADHESIVE LAYER (mm) | WIDTH OF GAP IN ADHESIVE LAYER (mm) | | | | | | | | | | | | |
| EXAMPLE 17 | NOT FORMED | - | - | - | - | 0 | - | NOT FORMED | - | 12 | 12.65 | 12.50 | 11.79 | 10.61 | 0.99 | 0.94 | 0.85 |

Production of a positive electrode

97 parts by mass of lithium composite metal oxide represented as $LiNi_{0.55}Co_{0.20}Mn_{0.25}O_2$ as a positive electrode active material, 2 parts by mass of acetylene black (AB) as a conductive material, and 1 part by mass of poly(vinylidene fluoride) (PVdF) as a binder were mixed together, and an appropriate amount of N-methyl-2-pyrrolidone (NMP) was incorporated, to prepare a positive electrode mixture slurry. Next, the positive electrode mixture slurry was applied to both of two surfaces of a positive electrode current collector formed of aluminum foil, and the applied film was dried. The film was rolled by a roller, and then was cut into a predetermined electrode size, to produce a positive electrode including the positive electrode current collector and a positive electrode mixture layer formed on each of the two surfaces of the positive electrode current collector.

Production of a negative electrode

Next, 98.7 parts by mass of graphite powder as a negative electrode active material, 0.7 parts by mass of carboxymethylcellulose (CMC) as a thickener, and 0.6 parts by mass of styrene butadiene rubber (SBR) as a binder were mixed together, and an appropriate amount of water was incorporated, to prepare a negative electrode mixture slurry. Next, the negative electrode mixture slurry was applied to both of two surfaces of a negative electrode current collector formed of copper foil, and the applied film was dried. The film was rolled by a roller, and then was cut into a predetermined electrode size, to produce a negative electrode including the negative electrode current collector and a negative electrode mixture layer formed on each of the two surfaces of the negative electrode current collector.

Preparation of a non-aqueous electrolyte solution

Ethylenecarbonate (EC), ethylmethylcarbonate (EMC) and dimethylcarbonate (DMC) were mixed at a volume ratio of 3:3:4. $LiPF_6$ was dissolved in the obtained mixed solvent at a concentration of 1.2 mol/L to prepare a non-aqueous electrolyte solution.

Production of test cells

The positive electrode and the negative electrode were stacked alternately with the separator being sandwiched between the positive electrode and the negative electrode to produce a stacked electrode assembly. The electrode assembly had a thickness (a length in the stacking direction) of 22.8 mm. An accommodation portion of an electrode assembly holder in which the electrode assembly was to be accommodated had a width of 24.5 mm. A quadrangular box-shaped cell case (a case main body) in which the electrode assembly holder, accommodating the electrode assembly, is to be accommodated had a shorter side having an inner length of 24.8 mm. Next, the electrode assembly was sandwiched, in the stacking direction, between non-foaming elastic sheets formed of chloroprene rubber as a main component and each having a thickness of 0.47 mm and an elastic modulus of 1.5 MPa, and was accommodated in the electrode assembly holder in this state. The electrode assembly holder was accommodated in the case main body. Then, the non-electrolyte solution was injected into the case main body. The injection of the non-electrolyte solution was performed in a non-aqueous environment and in a state where the case main body was pressed such that a pressure was applied from both of two sides of the electrode assembly in the stacking direction. Next, leads (current collector exposed portions) of the electrodes were respectively connected with the positive electrode terminal and the negative electrode terminal provided on a sealing member, and an opening of the case main body was closed by the sealing member. In this manner, a quadrangular test cell was produced.

Measurement of the initial capacity

The test cell was charged at a constant current of 21.5 A until a voltage of 4.25 V was obtained, and then was charged at a constant voltage until a current of 3 A was obtained. Then, the test cell was discharged at a constant current of 21.5 A until a voltage of 2.5 V was obtained. The discharge capacity at this point was set as the initial capacity.
Next, a BOL counterforce and an EOL counterforce (End of Life counterforce) of the test cell were measured by the following methods.

Measurement of the BOL counterforce and the EOL counterforce

After the initial capacity was found, the test cell was discharged until an SOC (state of charge) of 0% was obtained. Then, the test cell was sandwiched between two SUS plate (140 mm × 75 mm) such that a pressure was applied from both of the two sides of the electrode assembly in the stacking direction, and a load-displacement curve was obtained by use of a universal tester AG-Xplus produced by Shimadzu Corporation. First, the two SUS plates were made close to the test cell, and pressure application was performed until the pressure represented by the load-displacement curve would be a predetermined pressure (see an assembling pressure shown in Table 2). Then, the test cell was charged at a constant current of 21.5 A until a voltage of 4.25 V was obtained, and then was charged at a constant voltage until a current of 3 A was obtained. Then, the test cell was discharged at a constant current of 21.5 A until a voltage of 2.5 V was obtained. The pressure represented by the load-displacement curve at this point was set as the BOL counterforce. Next, the test cell was repeatedly charged and discharged under the above-described charge and discharge conditions until the capacity of the test cell reached 70% of the initial capacity. The pressure that was represented by the load-displacement curve, when the test cell was discharged at a constant current in a charge and discharge cycle in which the capacity of the test cell reached 70% of the initial capacity, was set as the EOL counterforce. Table 2 shows the BOL counterforce and the EOL counterforce of each of the examples.

Evaluation of the BOL counterforce

After plural cells are assembled to form an assembled battery and the assembled battery is charged and discharged, the cells are more difficult to fall from a restraining member as the BOL counterforce has a larger value. Therefore, it is more preferred that the value of the BOL counterforce is larger. In this embodiment, a case where the BOL counterforce has a value smaller than 0.3 MPa is evaluated as "Not Good", a case where the BOL counterforce has a value of 0.3 MPa or larger is evaluated as "Good", and a case where the BOL counterforce has a value of 0.5 MPa or larger is evaluated as "Excellent".

Evaluation of the EOL counterforce

As the EOL counterforce has a smaller value, increase in the expansion pressure of the electrode assembly (negative electrode) caused by the charge and discharge of the cell is suppressed more. Therefore, it is more preferred that the value of the EOL counterforce is smaller. In this embodiment, a case where the EOL counterforce has a value of 0.3 MPa or larger is evaluated as "Not Good", a case where the EOL counterforce has a value smaller than 0.3 MPa is evaluated as "Good", and a case where the EOL counterforce has a value of 2.5 MPa or smaller is evaluated as "Excellent".

Comprehensive evaluation

A case where both of the BOL counterforce and the EOL counterforce are evaluated as " Excellent" is evaluated as " Excellent ", a case where either one of the BOL counterforce and the EOL counterforce is evaluated as " Good " and the other thereof is evaluated as " Good " or " Excellent " is evaluated as " Good ", and a case where at least one of the BOL counterforce and the EOL counterforce is evaluated as "Not Good" is evaluated as "Not Good". Table 2 shows the results.

[Table 2]

| | ASSEMBLING PRESSURE (MPa) | BOL COUNTERFORCE (MPa) | EOL COUNTERFORCE (MPa) | EVALUATION | | COMPREHENSIVE EVALUATION |
| --- | --- | --- | --- | --- | --- | --- |
| | | | | BOL COUNTERFORCE | EOL COUNTERFORCE | |
| EXAMPLE 1 | 1 | 0.5 | 2.7 | Excellent | Good | Good |
| EXAMPLE 2 | 1 | 0.6 | 2.5 | Excellent | Excellent | Excellent |
| EXAMPLE 3 | 1 | 0.7 | 2.3 | Excellent | Excellent | Excellent |
| EXAMPLE 4 | 1 | 0.7 | 2.6 | Excellent | Good | Good |
| EXAMPLE 5 | 1 | 0.4 | 2.3 | Good | Excellent | Good |
| EXAMPLE 6 | 1 | 0.6 | 2.2 | Excellent | Excellent | Excellent |
| EXAMPLE 7 | 1 | 0.3 | 2.4 | Good | Excellent | Good |
| EXAMPLE 8 | 1 | 0.4 | 2.5 | Good | Excellent | Good |
| EXAMPLE 9 | 1 | 0.4 | 2.8 | Good | Good | Good |
| EXAMPLE 10 | 1 | 0.5 | 3.1 | Excellent | Not Good | Not Good |
| EXAMPLE 11 | 0.4 | 0.1 | 2.8 | Not Good | Good | Not Good |
| EXAMPLE 12 | 1 | 0.4 | 3 | Good | Not Good | Not Good |
| EXAMPLE 13 | 0.8 | 0.1 | 2.8 | Not Good | Good | Not Good |
| EXAMPLE 14 | 1 | 0.5 | 3.2 | Excellent | Not Good | Not Good |

(continued)

| | ASSEMBLING PRESSURE (MPa) | BOL COUNTERFORCE (MPa) | EOL COUNTERFORCE (MPa) | EVALUATION | | COMPREHENSIVE EVALUATION |
|---|---|---|---|---|---|---|
| | | | | BOL COUNTERFORCE | EOL COUNTERFORCE | |
| EXAMPLE 15 | 0.7 | 0.1 | 3 | Not Good | Not Good | Not Good |
| EXAMPLE 16 | 1 | 0.6 | 3.4 | Excellent | Not Good | Not Good |
| EXAMPLE 17 | 0.5 | 0.2 | 2.9 | Not Good | Good | Not Good |

As shown in Table 2, in examples 1 through 9, a high BOL counterforce and a low EOL counterforce are both realized. Namely, in examples 1 through 9, increase in the expansion pressure of the electrode assembly caused by the repeated charge and discharge is suppressed, and an assembling stability is kept high. It is seen from Table 1 that the separators in examples 1 through 9 all satisfy the following inequalities (1) through (3).

$$(1) \qquad 1 \leq T1/T0 \leq 1.1$$

$$(2) \qquad 0.92 \leq T2/T1 \leq 1$$

$$(3) \qquad 0.6 \leq T4/T1 \leq 0.8$$

It is seen that even in the case where the heat resistant layer is formed only one surface of the substrate as in examples 5 and 6, even in the case where the heat resistant layer is not provided as in example 7, and even in the case where the adhesive layer contains inorganic particles as in example 9, a high BOL counterforce and a low EOL counterforce are both realized.

In examples 10, 11, 14 and 15, the adhesive layer is formed on the entirety of the surface of the heat resistant layer. In such a case, when the assembling pressure is increased in an attempt to guarantee a high BOL counterforce, the EOL counterforce is not sufficiently decreased. Also in the case where no adhesive layer is provided as in examples 16 and 17, when the assembling pressure is increased in an attempt to guarantee a high BOL counterforce, the EOL counterforce is not sufficiently decreased. As can be seen from these results, at least a structure in which the adhesive layer is formed partially is needed. Without this structure, suppression on the increase in the expansion pressure of the electrode assembly caused by the repeated charge and discharge, and a high assembling stability, are not both provided. It is seen from the results in examples 12 and 13 that even if the adhesive layer is formed in a striped pattern, if inequality (3) is not satisfied, the EOL counterforce is not sufficiently decreased.

While specific examples of the technology disclosed herein have been described in detail, the above description provides a mere example and does not limit the scope of the claims. The technology disclosed herein encompasses various modifications and alterations of the specific examples described above.

**Claims**

1. A separator (70), comprising:

   a sheet-like substrate (72) made of a porous resin, and
   an adhesive layer (76) containing an adhesive resin,
   wherein:

   the adhesive layer (76) is partially disposed on one side of, or both of two sides of, the substrate (72) in a thickness direction thereof, and
   where:

   an initial thickness of the separator (70) is T0,
   a thickness of the separator (70) in a state where the separator (70) is impregnated with an electrolyte solution and supplied with a pressure of 1 MPa in a thickness direction thereof is T1,
   a thickness of the separator (70) in a state where, after obtaining the thickness T1, the separator (70) is supplied with a pressure of 2 MPa in the thickness direction thereof for 1 hour, and the pressure is decreased to 0.5 MPa, is T2, and
   a thickness of the separator (70) in a state where, after obtaining the thickness T2, the separator (70) is supplied with a pressure of 4 MPa in the thickness direction thereof, and the pressure is kept for 48 hours, is T4,
   the separator (70) satisfies inequalities (1) through (3):

$$(1) \qquad 1 \leq T1/T0 \leq 1.1$$

$$(2) \qquad 0.92 \leq T2/T1 \leq 1$$

$$(3) \qquad 0.6 \leq T4/T1 \leq 0.8$$

**2.** The separator (70) according to claim 1, wherein
on the side of the substrate (72) where the adhesive layer (76) is disposed, the adhesive layer (76) occupies a surface area at a ratio of 40% or higher and 60% or lower with respect to a surface of the substrate (72).

**3.** The separator (70) according to claim 1 or 2, wherein
on the side of the substrate (72) where the adhesive layer (76) is disposed, the adhesive layer (76) has an average thickness of 2 $\mu$m or greater and 3 $\mu$m or less.

**4.** The separator (70) according to any one of claims 1 through 3, wherein
the adhesive layer (76) is provided at a predetermined pitch so as to form a striped pattern.

**5.** A non-aqueous electrolyte secondary cell (100), comprising:

an electrode assembly (20) including a positive electrode (50), a negative electrode (60), and the separator (70) according to any one of claims 1 through 4; and
a non-aqueous electrolyte solution (90).

**6.** An assembled battery (10), comprising:

plural cells aligned while being electrically connected to each other, wherein
at least one of the plural cells is the non-aqueous electrolyte secondary cell (100) according to claim 5.

FIG.1

70

64

70

60

54

62a

50

62

52a

52

52a

62a

20

FIG.2

FIG.3

70

76 78

MD

FIG.4

70

76 78

74

72

T0

FIG.5

FIG.6

FIG.7

FIG.8

FIG.9

Europäisches
Patentamt

European
Patent Office

Office européen
des brevets

## EUROPEAN SEARCH REPORT

**Application Number**

EP 22 21 4241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 181 303 A1 (PRIME PLANET ENERGY & SOLUTIONS INC [JP]) 17 May 2023 (2023-05-17) * paragraphs [0019] – [0024], [0026] – [0030], [0035] – [0038], [0044] – [0048], [0050], [0051], [0056], [0087] – [0096]; claims 1,3-5,8; examples * | 1-6 | INV. H01M10/0525 H01M50/403 H01M50/426 H01M50/431 H01M50/449 |
| E | EP 4 181 304 A1 (PRIME PLANET ENERGY & SOLUTIONS INC [JP]) 17 May 2023 (2023-05-17) * paragraphs [0017] – [0021], [0024] – [0026], [0029], [0032] – [0038], [0042] – [0049], [0093] – [0102]; claims 1,3,5-6; examples * | 1-6 | |
| X | EP 3 817 093 A1 (LG CHEMICAL LTD [KR]) 5 May 2021 (2021-05-05) * claims 1,4,6; examples * | 1-6 | |

TECHNICAL FIELDS
SEARCHED     (IPC)

H01M

The present search report has been drawn up for all claims

| Place of search | Date of completion of the search | Examiner |
|---|---|---|
| Munich | 23 May 2023 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ...................................................................................................
& : member of the same patent family, corresponding document

EPO FORM 1503 03.82 (P04C01)

**EP 4 207 417 A1**

## ANNEX TO THE EUROPEAN SEARCH REPORT
## ON EUROPEAN PATENT APPLICATION NO.

EP 22 21 4241

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2023

| Patent document cited in search report | | Publication date | Patent family member(s) | | Publication date |
|---|---|---|---|---|---|
| EP 4181303 | A1 | 17-05-2023 | CN | 116130884 A | 16-05-2023 |
| | | | EP | 4181303 A1 | 17-05-2023 |
| | | | US | 2023155250 A1 | 18-05-2023 |
| EP 4181304 | A1 | 17-05-2023 | CN | 116130887 A | 16-05-2023 |
| | | | EP | 4181304 A1 | 17-05-2023 |
| | | | US | 2023155251 A1 | 18-05-2023 |
| EP 3817093 | A1 | 05-05-2021 | CN | 112055899 A | 08-12-2020 |
| | | | EP | 3817093 A1 | 05-05-2021 |
| | | | JP | 7035217 B2 | 14-03-2022 |
| | | | JP | 2021517725 A | 26-07-2021 |
| | | | KR | 20190140681 A | 20-12-2019 |
| | | | TW | 202002360 A | 01-01-2020 |
| | | | US | 2021242538 A1 | 05-08-2021 |
| | | | WO | 2019240500 A1 | 19-12-2019 |

EPO FORM P0459

For more details about this annex : see Official Journal of the European Patent Office, No. 12/82

**REFERENCES CITED IN THE DESCRIPTION**

**Patent documents cited in the description**

- JP 6865379 B
- JP 2013222510 A
- JP 5799499 B
- JP 5328034 B